# EUROPEAN PATENT SPECIFICATION

(11) **EP 2 081 400 B1**
(45) Date of publication and mention of the grant of the patent: **27.11.2013**
(21) Application number: 09158780.8
(22) Date of filing: 27.04.2006
(51) Int. Cl.: H04R 1/28, H04R 1/02, H04M 1/03, H04R 1/22

(54) **Handheld electronic device having hidden sound openings offset from an audio source**
Tragbare elektronische Vorrichtung mit verborgenen, von einer Tonquelle versetzten Tonöffnungen
Dispositif électronique portable doté d'orifices de son cachés en décalage par rapport à une source audio

(43) Date of publication of application: 22.07.2009
(62) Divisional of application: 06252266.9
(73) Proprietor: BlackBerry Limited, Waterloo, ON N2K 0A7 (CA)
(72) Inventor: Ranta, Craig E, Waterloo Ontario N2L 3W8 (CA); Hawker, Larry, Waterloo Ontario N2L 3W8 (CA); Nobels, Jonathan, Waterloo Ontario N2L 3W8 (CA)
(74) Representative: Fennell, Gareth Charles

(56) References cited:
- WO-A2-02/34006
- US-A1- 2005 265 574

## Description

### 1. Field

The disclosed and claimed concept relates generally to handheld electronic devices and, more particularly, to a handheld electronic device having a number of sound openings that are spaced from an audio transducer and are generally hidden from view.

### 2. Description of the Related Art

Numerous types of handheld electronic device are known. Examples of such handheld electronic devices include, for instance, personal data assistants (PDAs), handheld computers, two-way pagers, cellular telephones, and the like. Many handheld electronic devices also feature a wireless communication capability, although many such handheld electronic devices are stand-alone devices that are functional without communication with other devices.
Certain handheld electronic devices have loudspeakers that are intended to be placed against the ear of a user. Such handheld electronic devices would include telephones and electronic devices having a telephone capability, as well as other devices. Devices of this type typically include an audio transducer, i.e., a loudspeaker, disposed within a case at an end of the case. The case typically includes one or more sound openings formed therein adjacent a sound-producing element of the audio transducer. The sound openings provide fluid communication between the audio transducer and the atmosphere surrounding the handheld electronic device to enable sounds produced by the audio transducer to be transmitted to the atmosphere and to be heard by a user. While such devices have been generally effective for their intended purposes, such devices have not, however, been without limitation.
An electronic device having a loudspeaker that is intended to be held to the ear typically has a low output volume. In order for sound from the audio transducer to be received within the ear of the user, the outer ear desirably forms at least a partial seal with an outer surface of the electronic device in the region surrounding a sound opening. On some devices such as a conventional telephone, a seal can be achieved between the electronic device and the outer ear merely by placing the device against the outer ear. However, with relatively small handheld electronic devices, the sound openings can be disposed sufficiently close to an edge of the electronic device that an effective seal between the handheld electronic device and the user's ear can be difficult to establish. This is particularly the case with relatively small handheld electronic devices that are configured to include a relatively small output transducer as the loudspeaker. Such an output transducer is often disposed within a case as close as possible to an edge of the case for reasons of compactness. That is, a handheld electronic device typically will not include other electronic components that are disposed, for instance, between the audio transducer and the edge of the case. Handheld electronic devices of today typically employ printed circuit board architecture, with the result that electronic components typically will not be remote from the printed circuit board and disposed between an audio transducer and an interior edge of a case. To intentionally space an audio transducer from an edge of a case would typically result in the electronic device having a void region between the audio transducer and the edge of the case since such a region typically would not be occupied by other components of the electronic device. The result would be a case that is unnecessarily long and having undesirable void regions within an interior thereof.
US2005/0265574 relates to a display cover for a communication device in which a cover includes a cavity for a speaker, the cover including sound holes.
The present invention is set out in the indpetendent claims. Optional features are set out in the dependent claims.
It thus would be desirable to provide an alternative configuration that can overcome at least some of the aforementioned shortcomings in the art.

### BRIEF DESCRIPTION OF THE DRAWINGS

A further understanding can be gained from the following Description when read in conjunction with the accompanying drawings in which:

Fig. 1 is a front elevational view of an improved handheld electronic device in accordance with a first embodiment of the disclosed and claimed concept;

Fig. 2 is a schematic depiction of the handheld electronic device of Fig. 1;

Fig. 3 is an enlarged front elevational view of a portion of the handheld electronic device of Fig. 1;

Fig. 4 is a perspective view of a portion of the handheld electronic device of Fig. 1;

Fig. 5 is a sectional view as taken along line 5-5 of Fig. 4;

Fig. 6 is a view similar to Fig. 3, except having a lens of the handheld electronic device removed;

Fig. 7 is a view of a portion of an interior region of the handheld electronic device of Fig. 1;

Fig. 8 is a front elevational view of an improved handheld electronic device in accordance with a second embodiment of the disclosed and claimed concept;

Fig. 9 is a perspective view of a portion of the handheld electronic device of Fig. 8;

Fig. 10 is another perspective view of a portion of the handheld electronic device of Fig. 8; and

Fig. 11 is a sectional view as taken along line 11-11 of Fig. 9 and additionally depicting a gasket of the handheld electronic device of Fig. 8.

Similar numerals refer to similar parts throughout the specification.

### DESCRIPTION

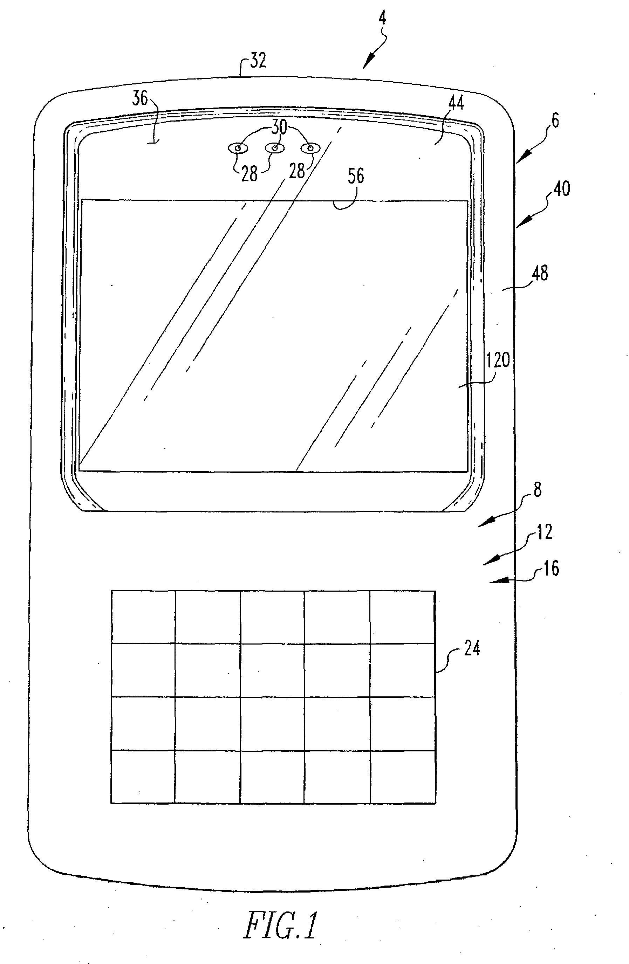

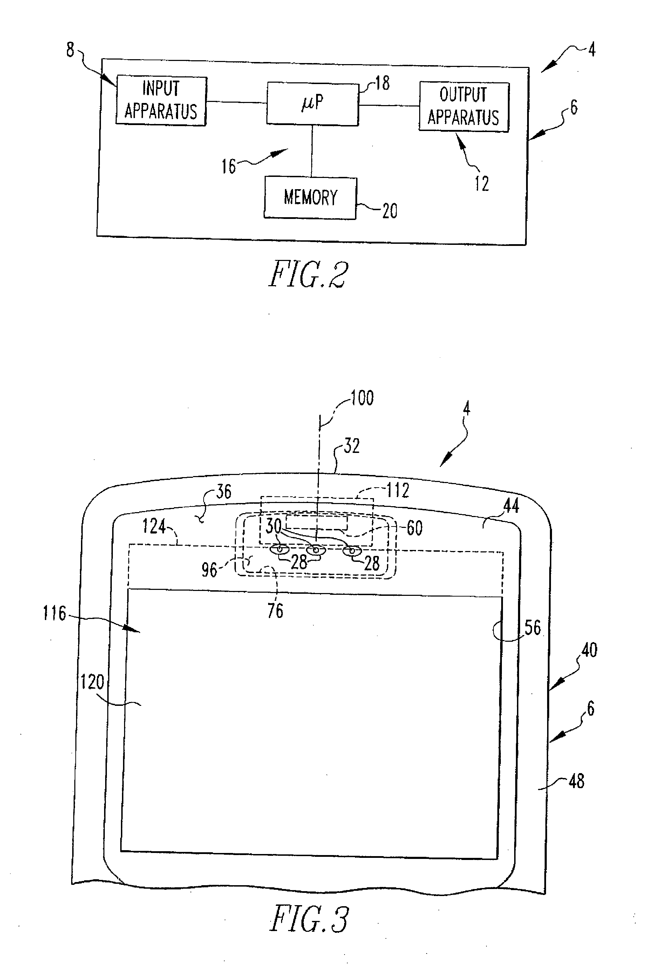

An improved handheld electronic device 4 is indicated generally in Fig. 1 and is depicted schematically in Fig. 2. The exemplary handheld electronic device 4 includes a case 6 upon which is disposed an operational apparatus that can be said to comprise an input apparatus 8, an output apparatus 12, and a processor apparatus 16. The processor apparatus 16 includes a processor 18 and a memory 20. The processor 18 may be, for instance and without limitation, a microprocessor (µP), and is responsive to inputs from the input apparatus 8 and provides output signals to the output apparatus 12. The processor 18 also interfaces with the memory 20. The memory 20 can be any one or more of RAM, ROM, EPROM(s), EEPROM(s), and/or other memory devices.

The input apparatus 8 includes a schematically depicted keypad 24 disposed on the case 6. As can be seen in Fig. 1, the case 6 has a number of sound openings 28 formed therein. As employed herein, the expression "a number of" and variations thereof shall refer broadly to any nonzero quantity, including a quantity of one. Each sound opening 28 is disposed at an end of a passage 30 formed in the case 6. The passages 30, and thus the sound openings 28, are advantageously spaced from a first edge 32 of the handheld electronic device 4. The sound openings 28 can generally be said to be formed in the case 6 at a front surface 36 of the handheld electronic device 4. The spacing of the sound openings 28 from the first edge 32 advantageously enables the user to form a seal between the user's ear and the front surface 36, which enables the user to hear sound produced through the sound openings 28. As employed herein, the expression "seal" and variations thereof shall refer broadly to a type of interface between two articles wherein fluid flow through the interface, i.e., between the articles, is resisted.

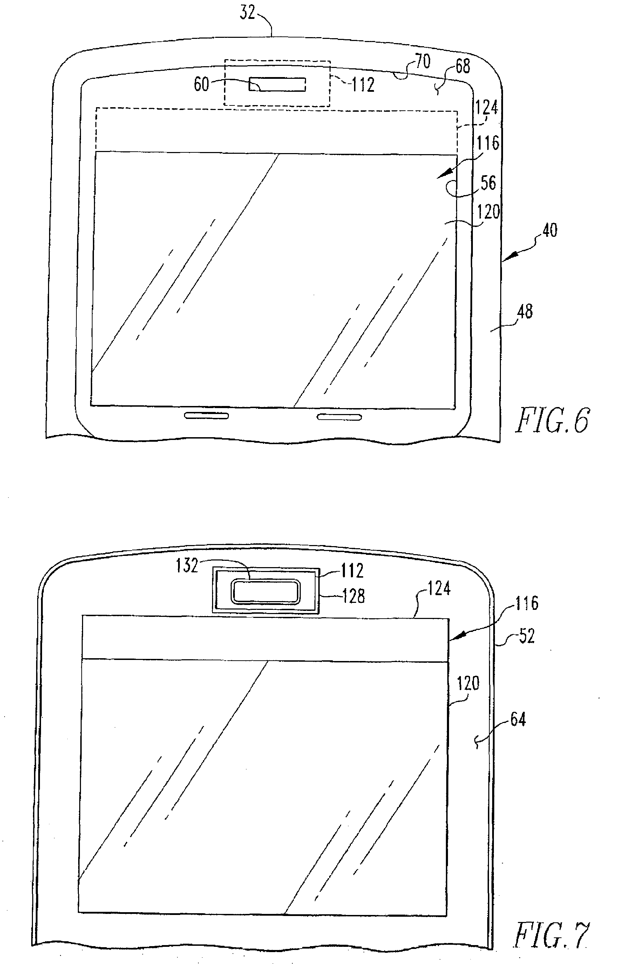

The case 6 includes a housing 40 and a lens 44, with the lens 44 being disposed on the housing 40. In the present embodiment the lens 44 can be said to serve as a cover, it being understood that other types of covers may be employed in different embodiments. The housing 40 includes a front portion 48 and a rear portion 52 (Fig. 7). Fig. 6 generally depicts the handheld electronic device 4 with the lens 44 removed. Fig. 7 depicts the handheld electronic device 4 with the front portion 48 of the housing 40 additionally removed. As is best shown in Fig. 6, the front portion 48 has a window 56 and a transducer hole 60 formed therein. The front and rear portions 48 and 52 when assembled together have a hollow interior region 64 (Fig. 7) disposed generally therebetween. The window 56 is in communication with the interior region 64.

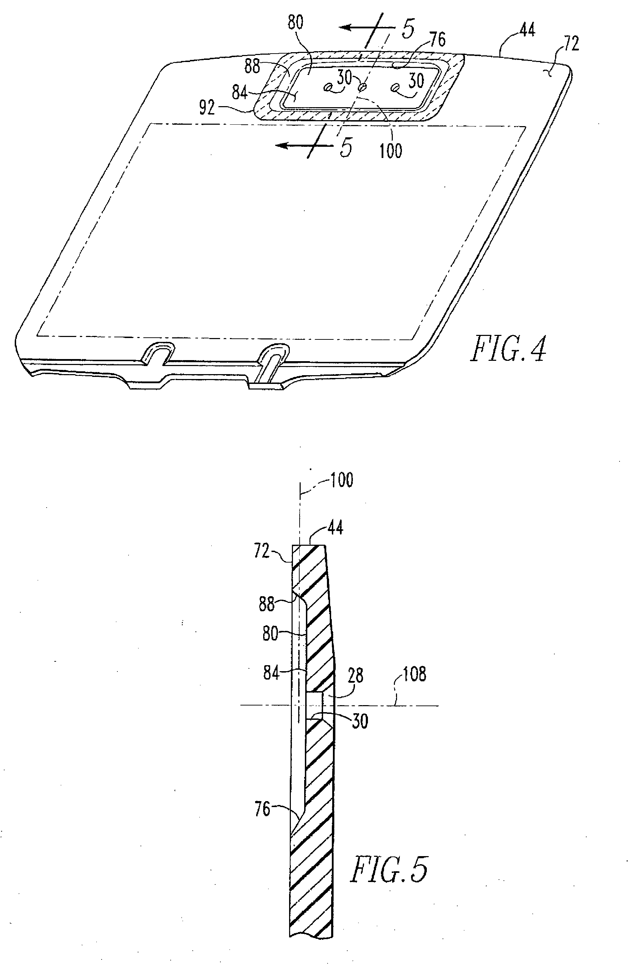

The front portion 48 includes a housing surface 68 (Fig. 6) disposed adjacent the window 56. In the present exemplary embodiment, the front portion 48 has a seat 70 formed therein within which the lens 44 is disposed. The housing surface 68 is generally disposed in the front portion 48 within the seat 70. As can be seen in Fig. 4, the lens 44 has a lens surface 72. When assembled, the lens surface 72 is disposed on the housing surface 68.

As can further be seen in Fig. 4, the lens 44 has an indentation 76 formed therein adjacent the lens surface 72. The lens 44 thus includes a floor portion 80 adjacent the indentation 76, with the floor portion 80 having a floor surface 84 adjacent the indentation 76. The lens 44 also has a peripheral surface 88 adjacent the indentation 76 that extends between the floor surface 84 and the lens surface 72. A periphery about the indentation 76 is indicated generally at the numeral 92 on the portion of the lens surface 72 surrounding the indentation 76. It can be seen that the passages 30 are formed in the floor portion 80 of the lens 44.

When the lens surface 72 is disposed on the housing surface 68, the periphery 92 about the indentation 76 is sealed to the opposing portion of the housing surface 68 to form a substantially sealed cavity 96 between at least a portion of the lens 44 adjacent the lens surface 72 and at least a portion of the housing 40 adjacent the housing surface 68. Such a seal can be formed in any of a variety of ways, such as with the use of adhesives, welding techniques, forming techniques, and the like.

It is understood that the cavity 96 is substantially sealed, except that the transducer hole 60 and the sound openings 28 are in fluid communication with an interior of the cavity 96 and with the exterior of the cavity 96. The cavity 96 is elongated along a first axis indicated generally at the numeral 100 in Fig. 4. The first axis 100 is oriented substantially parallel with the floor surface 84. As can be understood from Figs. 4 and 5, the cavity 96 is elongated along another axis transverse to the first axis 100, whereby the cavity 96 can be said to be elongated along a plane defined by the first axis 100 and the axis transverse thereto.

As can further be seen in Figs. 4 and 5, the passages 30 in the present exemplary embodiment extend through the floor portion 80 along a second axis 108 that is oriented substantially orthogonal to the first axis 100. Other configurations in other embodiments are possible.

As is best understood in Figs. 3 and 7, the output apparatus 12 includes an audio transducer 112 and a display 116 disposed on the rear portion 52 of the housing 40. The audio transducer 112 in the present example is a loudspeaker disposed in a receptacle 128 (Fig. 7) on the rear portion 52. The display 116 includes a screen 120 and a connection apparatus 124. The display 116 and the audio transducer 112 are disposed within the interior region 64 of the housing 40. The screen 120 is disposed adjacent the window 56 and is visible through the window 56 to an observer disposed at the exterior of the housing 40. It is understood that the atmosphere is disposed generally at the exterior of the housing 40.

The connection apparatus 124 is connected (not shown in Fig. 7) with the processor apparatus 16. As can be seen in Fig. 7, the audio transducer 112 disposed in the receptacle 128 is disposed adjacent the connection apparatus 124 of the display 116. As is understood in the relevant art, the display 116 is a unitary structure, and the connection apparatus 124 provides the means by which the screen 120 is operatively connected with the processor apparatus 16 to enable signals from the processor apparatus 16 to be provided to the screen 120 for visual output.

A gasket 132 is depicted in Fig. 7 as being disposed atop a sound-producing element of the audio transducer 112. The gasket 132 forms a seal against the underside (not expressly depicted herein) of the front portion 48 in the region surrounding the transducer hole 60 to provide a substantially airtight seal between the audio transducer 112 and the front portion 48, which enables sound produced by the audio transducer 112 to travel through the cavity 96 between the transducer hole 60 and the sound openings 28.

The lens 44 is at least partially translucent and at least partially overlies the screen 120. As employed herein, the expression "translucent" and variations thereof shall refer broadly to a quality that permits the passage of light and may include a transparent quality wherein light is transmitted without appreciable scattering so that it does not meaningfully alter light waves traveling therethrough.

As can be understood from Fig. 3, the audio transducer 112 is disposed closely adjacent the first edge 32 of the case 6. The centers of the sound openings 28 are spaced farther from the first edge 32 than a center of the audio transducer 112. In the present exemplary embodiment, the center of the audio transducer 112 is indicated generally by the placement of the transducer hole 60, as in Fig. 6.

The cavity 96 in the present exemplary embodiment is configured to form a Helmholtz resonator that enables sounds produced by the audio transducer 112 to be received through the transducer hole 60, into the interior of the cavity 96, and out of the sound openings 28 where the sounds can be heard by a user, such as when the user has formed a seal between the user's ear and the front surface 36 of the case 6. In the present exemplary embodiment, the cavity 96 has an interior volume on the order of about 150 cubic millimeters, although other configurations may be appropriate. In the present exemplary embodiment, the centers of the sound openings 28 are spaced about 13-16 millimeters from the first edge 32, and the spacing, center-to-center, between the outermost sound openings 28 is about 10-12 millimeters, although other configurations may be appropriate.

The exemplary indentation 76 is formed in the lens 44 and is of a depth of about 0.6-0.8 millimeters, although other configurations could be employed. It is also noted that in other embodiments a portion of the indentation 76 could be formed in the front portion 48 of the housing 40 without departing from the present concept. That is, the cavity 96 could be formed in both the lens 44 and the housing 40 depending on the desired configuration.

It is understood that telephone communication typically occurs in the range of about 300-3400 hertz, and that a transducer such as the audio transducer 112 typically operates in the 300-2000 hertz range. The audio transducer 112 typically will produce frequencies above 2000 hertz only at a relatively low amplitude. The Helmholtz resonator provided by the cavity 96, the transducer hole 60, and/or the sound openings 28 is tuned to about 3000 hertz, thus amplifying those relatively higher frequencies that typically would be at a relatively small amplitude from the audio transducer 112, and generally leaving other frequencies alone. As such, the Helmholtz resonator provided by the case 6 can be said to be configured to provide relatively better audio response in certain respects than the audio response of the audio transducer 112 by itself. It is noted that the audio signals generated by the audio transducer 112 are typically the subject of digital signal processing according to an acoustic model that takes into consideration the frequency response of the cavity 96 to provide an overall desirable frequency output at the sound openings 28.

The cavity 96 thus advantageously enables the sound openings 28 to be spaced away from a position directly above the audio transducer 112 to a position offset therefrom along the first axis 100. The audio transducer 112, being in fluid communication with the cavity 96 though the transducer hole 60, enables sounds from the audio transducer 112 to be communicated to the interior of the cavity 96. The sound openings 28, which are in fluid communication with both the interior of the cavity 96 and the atmosphere via the passages 30, enable sounds produced by the audio transducer 112 and provided to the cavity 96 to be transmitted through the cavity 96, through the sound openings 28, and into the atmosphere.

In this regard, when the user has at least partially formed a seal between the user's ear and the front surface 36 of the case 6, the sounds desirably can enter the ear and can be accurately perceived by the user. The cavity 96 is thus configured to extend between a first position adjacent (i.e., above, from the perspective of Fig. 3) the audio transducer 112, and thus adjacent (i.e., above, from the perspective of Fig. 3) the transducer hole 60, and a second position adjacent (i.e., above, from the perspective of Fig. 3) the display 116. It can be understood that the display 116 serves as a limiting feature or structure that limits placement of the audio transducer 112 to a position at most adjacent, but not above (from the perspective of Fig. 3,) the display 116.

The cavity 96 advantageously enables the sound openings 28 to be positioned at a location that is desirable for the transmission of sound into the interior of the user's ear without particular regard for the precise location of the audio transducer 112. Moreover, the sound openings 28 are spaced along the first axis 100 from the transducer hole 60. It additionally can be seen that the sound openings 28, from the perspective of Fig. 3, overly at least a portion of the display 116 and, more specifically, a portion of the connection apparatus 124. It is understood, however, that other configurations of the cavity 96 and other positionings of the sound openings 28 with respect to the audio transducer 112 and/or with respect to the first edge 32 can be employed. The sound openings 28 can be spaced from the audio transducer 112, yet desirably would not be disposed above the screen 120 where they otherwise might interfere with the user's visual perception of the screen 120.

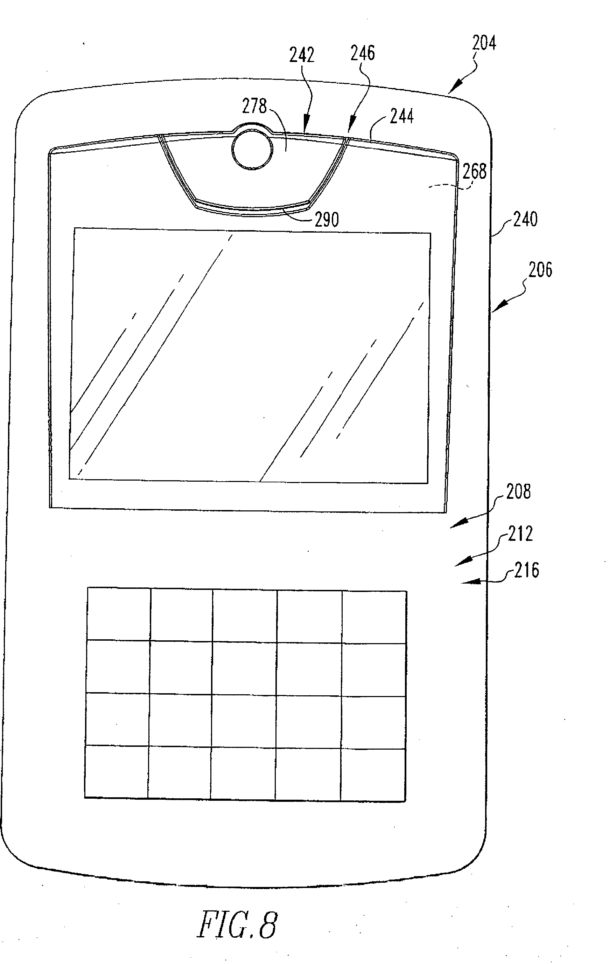

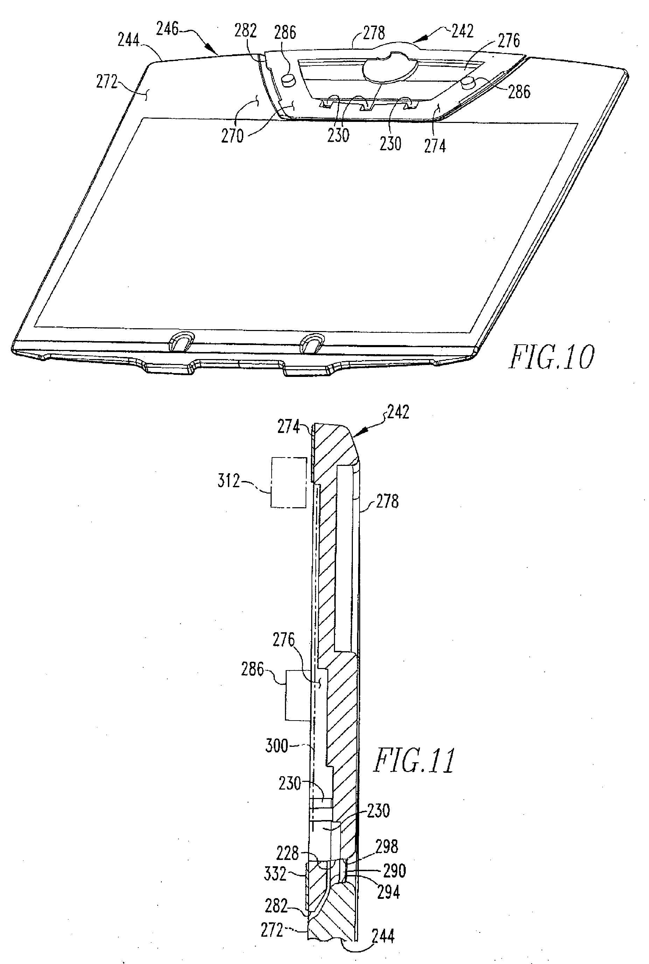

Another improved handheld electronic device 204 in accordance with a second embodiment of this disclosed and claimed concept is depicted generally in Fig. 8. The handheld electronic device 204 is similar to the handheld electronic device 4 in that it includes a case 206 upon which are disposed an input apparatus 208, an output apparatus 212, and a processor apparatus 216. Moreover, the case 206 comprises a housing 240 upon which is disposed a cover 246. However, the cover 246 of the handheld electronic device 204 comprises a lens 244 and an insert 242. The cover 246 can be said to have a cover surface 270 which comprises a lens surface 272 disposed on the lens 244 and an insert surface 274 disposed on the insert 242. The insert 242 is mounted to the housing 240 with the insert surface 274 being disposed on the housing surface 268, it being understood that a gasket 332, as is best shown in Fig. 11, is disposed therebetween. The insert 242 has an indentation 276 formed therein adjacent the insert surface 274. When the insert 242 is disposed on the housing 240, the indentation 276 forms a cavity between the insert 242 and the housing 240 which forms a Helmholtz resonator, such as is provided on the handheld electronic device 4.

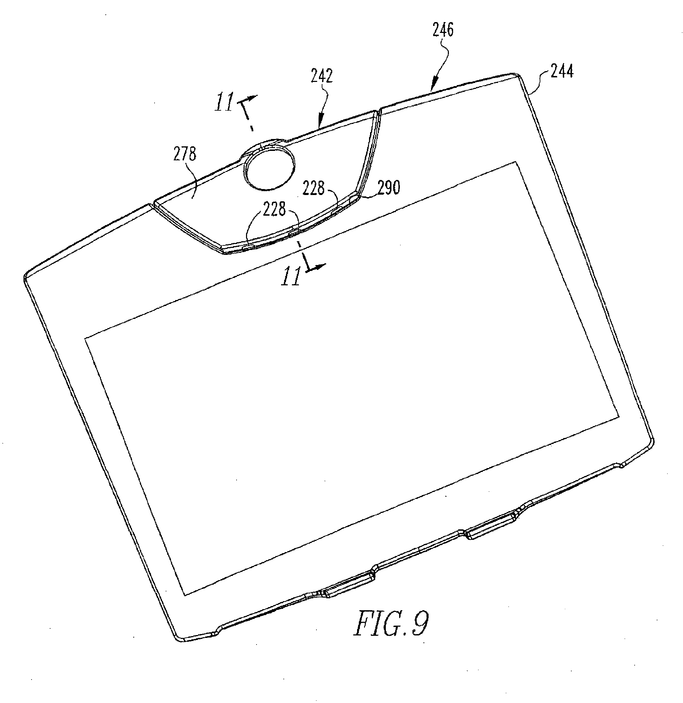

As is best shown in Figs. 10 and 11, the insert 242 has a plurality of passages 230 formed therein adjacent the insert surface 274. Each passage 230 extends between the indentation 276 and a sound opening 228 on the insert 242. The sound openings 228 are advantageously largely hidden from view when observed from the front of the handheld electronic device 204, but which can be at least partially viewed when seen from a proper angle, such as is shown in Fig. 9.

More specifically, the insert 242 and the lens 244 are disposed adjacent one another. As can be seen in Fig. 11, a portion of the lens 244 overlies a portion of the insert 242. A lens lateral surface 294 of the lens 244 is in a confronting relationship and is spaced from an insert lateral surface 298 of the insert 242, and a channel 290 thus exists between the lens lateral surface 294 and the insert lateral surface 298. The channel 290 is in fluid communication with the atmosphere.

As can be understood from Figs. 9 and 11, the sound openings 228 are formed in the insert lateral surface 298 and face the lens lateral surface 294. As such, it can be seen that the passages 230, and thus the sound openings 228, provide fluid communication between the channel 290 and the indentation 276. Fluid communication is thereby enabled between the channel 290 and the cavity formed between the indentation 276 and the housing 240.

As can further be seen from Fig. 11, the insert 242 comprises a body 278, a tongue 282, and a pair of lugs 286. The tongue 282 protrudes outwardly from the body 278, and at least a portion of the insert surface 274 is disposed on the tongue 282. The lugs 286 protrude from the insert surface 274 and enable mechanical attachment of the insert 242 to the housing 240. The passages 230 are formed in the body 278 and are disposed generally between the tongue 282 and the indentation 276.
At least a portion of the lens 244 overlies at least a portion of the tongue 282.

The passages 230 and the sound openings 228 can been seen to be spaced along an axis 300 from the audio transducer 312, such as is depicted in an exemplary and schematic fashion in Fig. 11. This advantageously facilitates the user forming a seal between the handheld electronic device 204 and the user's ear for listening to sounds produced by the audio transducer 312. That is, the positioning of the passages 230 and the sound openings 228 enables sound to be provided to the channel 290, which can then be received in the user's ear.

The positioning of the passages 230 and the sound openings 228 enables the generation of audible output in an aesthetically pleasing fashion by providing the sound openings 228 in a position substantially hidden from view when observed from the front of the handheld electronic device 204. Such positioning of the sound openings in a position offset from the audio transducer 312 enables the formation of a seal between the user's ear and the case 206.

Moreover, by providing the insert 242 as a component separate from the lens 244, the mounting of the insert 242 to the housing 240 is greatly simplified. Specifically, the gasket 332 creates a seal about a periphery of the indentation 276 between the insert 242 and the housing 240, thereby sealing the cavity formed by the indentation 276 and the housing 240. By providing the insert 242 as a component separate from the lens 244, i.e., the insert 242 by itself is a relatively smaller component than the combination of the insert 242 and the lens 244, the cavity formed by the indentation 276 and the housing 240 can be more readily sealed. That is, the insert 242 is in a sealable configuration. Configuring the insert 242 alone in a sealable configuration is more cost effective, and is thus more advantageous, than a configuration wherein both the insert 242 and the lens 244 would be configured to be of a sealable configuration. Also, the seal provided between the housing 240 and the insert 242 by the gasket 332 has a tendency to be more stable and reliable than would be a seal between the housing 240 and a component relatively larger than the insert 242. Moreover, the insert 242 as a separate component can be readily customized with various colors, logos, etc., which is advantageous.

While specific embodiments of the disclosed and claimed concept have been described in detail, it will be appreciated by those skilled in the art that various modifications and alternatives to those details could be developed in light of the overall teachings of the disclosure.

### Aspects and features of this disclosure are set out in the following paragraphs which show aspects of the parent application as filed:

One aspect of the disclosure provides a handheld electronic device (4) comprising:
a case (6) comprising a housing (40) and a cover (44), the housing (40) having a housing surface (48), the cover (44) having a cover surface (72), and having an elongated channel formed therein opposite the cover surface;
an output apparatus comprising an audio transducer disposed on the housing;
the case (6) having an indentation (76) formed in at least one of the housing, the indentation being adjacent the housing surface, and the cover, the indentation being adjacent the cover surface;
at least a portion of the cover surface being disposed adjacent at least a portion of the housing surface;
the indentation (76) forming a cavity (96) in the case, and being disposed between at least a portion of the housing adjacent the housing surface and at least a portion of the cover adjacent the cover surface, the cavity being elongated along at least a first axis (100);
the audio transducer being in fluid communication with the cavity (96);
the case having at least a first opening (28) formed therein in fluid communication with the cavity via the channel; and
the at least first opening being offset along the at least first axis from a position directly above the audio transducer.
The indentation and the at least first opening may be formed in the cover.
The cover may comprise an insert and a lens disposed adjacent one another, the indentation and the at least first opening being formed in the insert, the channel being disposed between the insert and the lens.
The at least first opening may face the lens.
At least a portion of the lens may overlie at least a portion of the insert.
The insert may comprise a body and a tongue, the tongue protruding from the body, at least a portion of the cover surface being disposed on the tongue, the at least portion of the lens overlying at least a portion of the tongue.
The case may comprise a seal disposed between the housing and at least a portion of the tongue about a periphery of the cavity.
The body may have at least a first passage formed therein, the passage extending between the cavity and the at least first opening, the passage being disposed between the tongue and the cavity.
The passage may be formed in the body adjacent the cover surface.

## Claims

1. A handheld electronic device (4) comprising:
a case (6) comprising a housing (40), a cover (44), and an audio transducer;
the case having an outer perimeter;
the audio transducer disposed within the case and adjacent to the case outer perimeter;
the case defining a cavity forming an elongated Helmholtz resonator, the Helmholtz resonator being elongated along at least a first axis (100);
the audio transducer being in fluid communication with the Helmholtz resonator;
the case having at least a first opening (28) formed in the cover in fluid communication with the Helmholtz resonator;
the at least the first opening being offset along the at least a first axis from a position directly above the audio transducer enabling the formation of a seal between a user's ear and the case; and
the cover having an insert (42) and a lens (44) disposed adjacent one another, the at least the first opening being formed in a lateral surface of the insert, the channel being disposed between the insert and the lens.

2. The handheld electronic device of Claim 1, wherein the at least the first opening faces the lens.

3. The handheld electronic device of Claim 1, wherein at least a portion of the lens overlies at least a portion of the insert.

4. The handheld electronic device of Claim 2, wherein the at least the first opening comprises at least two openings.

5. The handheld electronic device of Claim 4, wherein the insert comprises a body and a tongue, the tongue protruding from the body, at least a portion of the cover surface being disposed on the tongue, the at least a portion of the lens overlying at least a portion of the tongue.

6. The handheld electronic device of Claim 5, wherein the case comprises a seal disposed between the housing and at least a portion of the tongue about a periphery of the cavity.

7. The handheld electronic device of Claim 5, wherein the body has at least a first passage formed therein, the passage extending between the Helmholtz resonator and the at least the first opening, the passage being disposed between the tongue and the Helmholtz resonator.

8. The handheld electronic device of Claim 7, wherein the passage is formed in the body adjacent the cover surface.

9. The handheld electronic device of any one of Claims 1 to 8, wherein:
the housing (40) having a housing surface (48), a front portion (48) and a rear portion (52);
the cover (44) having a cover surface (72);
the cover being coupled to the housing with at least a portion of the cover surface (274) disposed on at least a portion of the housing surface; and
the case (6) having an indentation (76) formed in at least one of the housing, the indentation being adjacent the housing surface, and the cover, the indentation being adjacent the cover surface, the indentation defining the Helmholtz resonator.

## Patentansprüche

1. Eine handgehaltene elektronische Vorrichtung (4), die aufweist:
eine Hülle (6) mit einem Gehäuse (40), einer Abdeckung (44) und einem Audio-Transducer;
wobei die Hülle einen äußeren Umfang hat;
wobei der Audio-Transducer in der Hülle und angrenzend an den äußeren Umfang der Hülle angeordnet ist;
wobei die Hülle einen Hohlraum definiert, der einen länglichen HelmholtzResonator bildet, wobei sich der Helmholtz-Resonator entlang zumindest einer ersten Achse (100) erstreckt;
wobei der Audio-Transducer in Fluid-Verbindung mit dem HelmholtzResonator ist;
wobei die Hülle zumindest eine erste Öffnung (28) hat, die in der Abdeckung ausgebildet ist, in Fluid-Verbindung mit dem HelmholtzResonator;
wobei die zumindest erste Öffnung entlang der zumindest ersten Achse von einer Position direkt oberhalb des Audio-Transducers versetzt ist, was die Bildung einer Abdichtung zwischen einem Ohr eines Benutzers und der Hülle ermöglicht; und
wobei die Abdeckung eine Einfügung (42) und eine Linse (44) hat, die aneinander angrenzend angeordnet sind, wobei die zumindest erste Öffnung in einer Seitenfläche der Einfügung ausgebildet ist, wobei der Kanal zwischen der Einfügung und der Linse angeordnet ist.

2. Die handgehaltene elektronische Vorrichtung gemäß Anspruch 1, wobei die zumindest erste Öffnung der Linse zugewandt ist.

3. Die handgehaltene elektronische Vorrichtung gemäß Anspruch 1, wobei zumindest ein Teil der Linse über zumindest einem Teil der Einfügung liegt.

4. Die handgehaltene elektronische Vorrichtung gemäß Anspruch 2, wobei die zumindest erste Öffnung zumindest zwei Öffnungen aufweist.

5. Die handgehaltene elektronische Vorrichtung gemäß Anspruch 4, wobei die Einfügung einen Körper und eine Zunge aufweist, wobei die Zunge aus dem Körper herausragt, wobei zumindest ein Teil der Abdeckungsoberfläche auf der Zunge angeordnet ist, wobei der zumindest Teil der Linse über zumindest einem Teil der Zunge liegt.

6. Die handgehaltene elektronische Vorrichtung gemäß Anspruch 5, wobei die Hülle eine Abdichtung aufweist, die zwischen dem Gehäuse und zumindest einem Teil der Zunge um einen Umgang des Hohlraums angeordnet ist.

7. Die handgehaltene elektronische Vorrichtung gemäß Anspruch 5, wobei der Körper zumindest einen ersten Durchlass darin ausgebildet hat, wobei sich der Durchlass zwischen dem Helmholtz-Resonator und der zumindest ersten Öffnung erstreckt, wobei der Durchlass zwischen der Zunge und dem Helmholtz-Resonator angeordnet ist.

8. Die handgehaltene elektronische Vorrichtung gemäß Anspruch 7, wobei der Durchlass in dem Körper angrenzend an die Abdeckungsoberfläche ausgebildet ist.

9. Die handgehaltene elektronische Vorrichtung gemäß einem der Ansprüche 1 bis 8, wobei:
das Gehäuse (40) eine Gehäuseoberfläche (48), einen vorderen Teil (48) und einen hinteren Teil (52) hat;
wobei die Abdeckung (44) eine Abdeckungsoberfläche (72) hat;
wobei die Abdeckung an dem Gehäuse gekoppelt ist mit zumindest einem Teil der Abdeckungsoberfläche (72) auf zumindest einem Teil der Gehäuseoberfläche angeordnet; und
wobei die Hülle (6) eine Vertiefung (76) hat, die in zumindest einem des Gehäuses, wobei die Vertiefung angrenzend an die Gehäuseoberfläche ist, und der Abdeckung ausgebildet ist, wobei die Vertiefung angrenzend an die Abdeckungsoberfläche ist, wobei die Vertiefung den Helmholtz-Resonator definiert.

## Revendications

1. Dispositif électronique portatif (4) comprenant :
un boîtier (6) comportant un logement (40), un couvercle (44) et un transducteur audio ;
le boîtier ayant un périmètre extérieur ;
le transducteur audio étant disposé dans le boîtier, en étant adjacent au périmètre extérieur du boîtier ;
le boîtier définissant une cavité formant un résonateur de Helmholtz allongé, le résonateur de Helmholtz étant allongé dans la direction d'au moins un premier axe (100) ;
le transducteur audio étant en communication fluidique avec le résonateur de Helmholtz ;
le boîtier possédant au moins une première ouverture (28) formée dans le couvercle et en communication fluidique avec le résonateur de Helmholtz ;
ladite au moins une première ouverture étant décalée le long dudit au moins premier axe par rapport à une position directement au-dessus du transducteur audio, ce qui permet la formation d'un joint d'étanchéité entre l'oreille de l'utilisateur et le boîtier ; et
le couvercle possédant une pièce rapportée (42) et une lentille (44) adjacentes l'une à l'autre, ladite au moins une première ouverture étant formée dans une surface latérale de la pièce rapportée, et le canal étant disposé entre la pièce rapportée et la lentille.

2. Dispositif électronique portatif selon la revendication 1, dans lequel ladite au moins une première ouverture fait face à la lentille.

3. Dispositif électronique portatif selon la revendication 1, dans lequel au moins une partie de la lentille recouvre au moins une partie de la pièce rapportée.

4. Dispositif électronique portatif selon la revendication 2, dans lequel ladite au moins une première ouverture comprend au moins deux ouvertures.

5. Dispositif électronique portatif selon la revendication 4, dans lequel la pièce rapportée comprend un corps et une languette, la languette formant saillie par rapport au corps, au moins une partie de la surface du couvercle étant disposée sur la languette, ladite au moins une partie de la lentille recouvrant au moins une partie de la languette.

6. Dispositif électronique portatif selon la revendication 5, dans lequel le boîtier comprend un joint d'étanchéité disposé entre le logement et au moins une partie de la languette, autour d'une périphérie de la cavité.

7. Dispositif électronique portatif selon la revendication 5, dans lequel le corps possède au moins un premier passage qui y est formé, le passage s'étendant entre le résonateur de Helmholtz et ladite au moins une première ouverture, le passage étant disposé entre la languette et le résonateur de Helmholtz.

8. Dispositif électronique portatif selon la revendication 7, dans lequel le passage est formé dans le corps, de manière adjacente à la surface du couvercle.

9. Dispositif électronique portatif selon l'une quelconque des revendications 1 à 8, dans lequel :
le logement (40) possède une surface de logement (48), une partie avant (48) et une partie arrière (52) ;
le couvercle (44) possède une surface de couvercle (72) ;
le couvercle est couplé au logement, avec au moins une partie de la surface du couvercle (274) disposée sur au moins une partie de la surface du logement ; et
le boîtier (6) possède une indentation (76) formée soit dans le logement, l'indentation étant adjacente à la surface du logement, soit dans le couvercle, l'indentation étant adjacente à la surface du couvercle, l'indentation définissant le résonateur de Helmholtz.
